# EUROPEAN PATENT APPLICATION

(11) **EP 0 826 312 A2**
(43) Date of publication of application: **04.03.1998**
(21) Application number: 97202635.5
(22) Date of filing: 28.08.1997
(51) Int. Cl.: A23L 1/015, A23L 1/325

(54) **A process for detoxification of shellfish contaminated with paralytic toxins**

(30) Priority: 29.08.1996 CL 152596
(71) Applicant: Tepual, S.A., Recoleta, Santiago (CL)
(72) Inventor: Blamey, Jenny, Santiago (CL); Chiong, Mario, Santiago (CL); Hinrichsen, Juan Pablo, Santiago (CL); Lopez, Claudia, Santiago (CL); Paz Ocaranza, Maria, Santiago (CL); Rutman, Max, Santiago (CL); Lagos, Nestor, Santiago (CL)
(74) Representative: Ungria Lopez, Javier

(57) **Abstract**

The invention relates to process for detoxifying shellfish contaminated with paralytic toxin, whereby decontamination is achieved by an industrial process that involves a chemical treatment of shellfish, the chemical treatment consisting in cooking the shellfish in an alkaline pH solution. This treatment could be combined with one or several other processes aimed to the reduction of the product final toxicity, for example partial shellfish detoxification by depuration, removal of the most toxic parts, and commercial cooking/canning. This procedure succeeds in reducing total toxicity level of shellfish to values lower than 80 ug of eq. STX/ 100 g shellfish, independently of the toxin profile or initial toxicity present in the shellfish.

## Description

The present invention refers to a process for detoxifying shellfish contaminated with paralytic toxins by means of a chemical treatment.

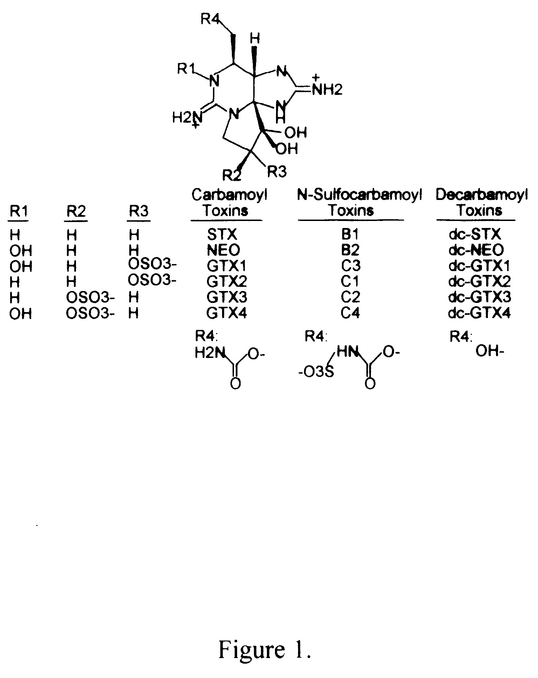

Paralytic Shellfish Poisoning (PSP) is known for centuries and it has been responsible for many deaths (Kao, C.Y. 1966. Tetrodotoxin, saxitoxin and their significance in the study of excitation phenomena. Pharmacol. Rev. 18: 997-1049). The toxins responsible of PSP are tetrahydropurines that block sodium channels, resulting in a respiratory and heart paralysis (Hall, S. 1982. Toxins and Toxicity of *Protogonyaulax* from the northeast Pacific. Ph. D. Thesis. University of Alaska). There have been described at least 18 types of PSP toxins, mainly from marine dinoflagellates and shellfish that feeds toxic algae. Intents to isolate PSP toxins began more than one century ago (Salkowski, E. 1885. Zur kenntniss des giftes der miesmuschel (*Mytilus edulis*). Virchows Arch. Path. Anat. u Physiol. 102: 578-592), but their occurrence as mixtures of compounds with diverse ionizable residues complicated their purification. The development of ionic exchange chromatography, guided by mouse bioassay, eventually allowed the isolation of a basic toxin, water soluble, from Alaska clams (*Saxidomas giganteus*) (Schantz, E.J., Mold, J.D., Stranger, D.W., Shavel, J., Riel, F., Bowden, J.P., Lynch, J.M., Wyler, R.S., Riegel, B. and Sommer, H. 1957. Paralytic Shellfish poison. VI. A procedure for the isolation and purification of the poison from toxic clam and mussel tissues. J. Am. Chem. Soc. 79: 5230-5235). This compound was called saxitoxin (STX) and therefore the group of paralytic toxins, saxitoxins (Schuett, W. and Rapopport, H. 1962. Saxitoxin, the paralytic shellfish poison. Degradation to a pyrrolopyrimide. J. Am. Chem. Soc. 84: 2266-2267). The STX structure was shown in the Figure 1 and it was established by X ray crystalography (Schantz, E.J., Mold, J.D., Stranger, D.W., Shavel, J., Riel, F., Bowden, J.P., Lynch, J.M., Wyler, R.S., Riegel, B. and Sommer, H. 1957. Paralytic Shellfish poison. VI. A procedure for the isolation and purification of the poison from toxic clam and mussel tissues. J. Am. Chem. Soc. 79: 5230-5235) and chemical synthesis (Tanino, H., Nakata, T., Kaneko, T. and Kishi, Y. 1977. A stereospecific total synthesis of d,1-saxitoxin. J. Am. Chem. Soc. 99: 2818-2819; Kishi, Y. 1980. Total synthesis of d,1-saxitoxin. Heterocycles 14: 1477-1495; Jacobi, P.A., Martinelli, M.J. and Polanc, S. 1984. Total synthesis of (±) saxitoxin. J. Am. Chem. Soc. 106: 5594-5598; Martinelli, M.J., Browstein, A.D. and Jacobi, P.A. 1986. The azomethine imine route to guanidines. Total synthesis of (±) - saxitoxin. Croatia Chemica Acta 59: 267-295).

In most cases, PSP toxins correspond to sulphatated derivatives of STX, such as the 11-hydroxysaxitoxin sulphates (gonyautoxins GTX2 and GTX3) or N-sulphocarbamoyl derivatives (B1, C1 and C2). It is possible to find also the N-1-hydroxysaxitoxin or neosaxitoxin (NEO) and their sulphates (B2, GTX1, GTX4, C3 and C4), as well as the less common decarbamoyl toxins (Sullivan, J.J., Iwaoka, W.T. and Liston, J. 1983. Enzymic transformations of PSP toxins in the little neck clam (*Prototbaca staminea*). Biochem. Biophys. Res. Comm. 114: 465-472). The STXs potencies, measured by mouse bioassay, vary enormously. Generally, the carbamoyl toxins are the most potent, the sulphocarbamoyl toxins are the less potent, and the decarbamoyl toxins have intermediate potency (Oshima, Y., Bolch, C.J. and Hallegraeff, G.M. 1992. Toxin composition of resting cysts of *Alexandrium tamarense* (Dinophyceae). Toxicon 30: 1539-1544).

Shellfish acquire and concentrate the STXs as a result of feeding with toxic dinoflagellates. Several species of dinoflagellates have been associated with paralytic toxins, including *Alexandrium catenella* (Schantz, E.J., Lynch, J.M., Vayada, G., Masumoto, K. and Rapoport, H. 1966. The purification and characterization of the poison produced by *Gonyaulax catenella* in axenic culture. Biochemistry 5: 1191-1195; Proctor, N.H., Chan, S.L. and Trevor, A.J. 1975. Production of saxitoxin by cultures of *Gonyaulax catenella*. Toxicon 13: 1-9; Bates, H.A., Kostriken, R. and Rapoport, A. 1978. The occurrence of saxitoxin and other toxins in various dinoflagellates. Toxicon 16: 595-601), *A. excavatum* (Desbiens, M., Coulombe, F., Gaudreault, J., Cembella, A.D. and Larocque, R. 1990. PSP toxicity of wild and cultured blue mussels induced by *Alexandrium excavatum* in Gaspe Bay (Canada): Implications for aquaculture. In "Toxic Marine Phytoplankton" (Graneli, E., Sundstrom, B., Edler, L. and Anderson, D.M. Eds.) Elsevier Science Publishing Co Inc., New York, pp. 459-468), *A. fundyense* (Anderson, D.M., Kulis, D.M., Sullivan, J.J. and Hall, S. 1990. Toxin composition variations in one isolate of the dinoflagellate *Alexandrium fundyense*. Toxicon 28: 885-894) and *A. tamarensis* (Prakash, A. 1967. Growth and toxicity of a marine dinoflagellate, *Gonyaulax tamarensis*. J. Fish. Res. Bd. Canada 24: 1589-1600; Anderson, D.M. and Po-on Cheng, T. 1988. Intracellular localization of saxitoxin in the dinoflagellate *Gonyaulax tamarensis*. J. Phycol. 24: 17-22) in the northern latitudes, and in the southern latitudes, *Gymnodinium catenatum*, *Pyrodinium bahamense* (Taylor, F.J.R. 1985. The taxonomy and relationships of red tide flagellates. In "Toxic Dinoflagellates" (Anderson, D.M., White, A.W. and Baden, E.G. Eds.) Elsevier Science Publishing Co Inc., New York, pp. 11-26; Anderson, D.M., Sullivan, J.J. and Reguera, B. 1989. Paralytic shellfish poisoning in northwest Spain: The toxicity of the dinoflagellate *Gymnodinium catenatum*. Toxicon 27: 665-674) and *Gonyaulax polyedra* (Bruno, M., Gucci, P.M.B., Pierdominici, E., Ioppolo, A. and Volterra, L. 1990. Short Communications. Presence of saxitoxin in toxic extracts from *Gonyaulax polyedra*. Toxicon 28: 1113-1116). The dinoflagellate cysts, deposited in the marine sediments, can remain toxic for several months (Selvin, R.C., Lewis, C.M., Yentsch, C.M. and Hurst, J.W. 1984. Seasonal persistence of resting cyst toxicity in the dinoflagellate *Gonyaulax tamarensis* var. excavata. Toxicon 22: 817-820). The composition of paralytic toxins varies enorrmously depending on the dinoflagellate specie from which they were isolated (Boyer, G.L., Sullivan, J.J., Andersen, R.J., Harrison, P.J. and Taylor, F.J.R. 1985. Toxin production in three isolates of *Protogonyaulax* sp. In "Toxic Dinoflagellates" (Anderson, D.M., White, A.W. and Baden, D.G. Eds.) Elsevier Science Publishing Co Inc., New York, pp. 281-286; Cembella, A.D., Sullivan J.J., Boyer, G.L., Taylor, F.J.R. and Anderson, .R.J. 1987. Variations in paralytic shellfish toxin composition within the *Protogonyaulax tamarensis/catenella* species complex; Red tide dinoflagellates. Biochem. System. Ecol. 15: 171-186). Also there are intra-specie variations (Maranda, L., Anderson, D.M. and Shimizu, Y. 1985. Comparison of toxicity between populations of *Gonyaulax tamarensis* of Eastern North American waters. Estuarine Coastal and Shelf Science 21: 401-410; Cembella, A.D., Sullivan J.J., Boyer, G.L., Taylor, F.J.R. and Anderson, R.J. 1987. Variations in paralytic shellfish toxin composition within the *Protogonyaulax tamarensis/catenella* species complex; Red tide dinoflagellates. Biochem. System. Ecol. 15: 171-186). However, toxin composition of a certain dinoflagellate strain, isolated from a particular geographical zone, is extremely constant.

Shellfish produces important changes in the paralytic toxin profile. Due to the differences of the toxin potencies, a shellfish can change drastically its total toxicity without modifying the total quantity of toxin (Oshima, Y., Sugino, K. Itakura, H., Hirota, M. and Yasumoto, T. 1990. Comparative studies on paralytic shellfish profile of dinoflagellates and bivalves. In "Toxic Marine Phytoplankton" (Graneli, E., Sundstrom, B., Edler, L. and Anderson, D.M. Eds.) Elsevier Science Publishing Co Inc., New York, pp. 391-396). Other changes in the toxin profile can occur due to non enzymatic processes. Without exception, the gonyautoxins suffer epimerization, with the equilibrium displaced to the alpha forms, that are energetically more favourable (Fix Wichmann, C.F., Niemczura, W.P., Schnoes, H.K., Hall, S., Reichardt, P.B. and Darling, S.D. 1981. Structures of two novel toxins from *Protogonyaulax*. J. Am. Chem. Soc. 103: 6977-6978; Hall, S. 1982. Toxins and Toxicity of *Protogonyaulax* from the northeast Pacific. Ph. D. Thesis. University of Alaska). The conversion speed is dependant on the pH and chemical structure, with a faster epimerization near to neutral pH. All paralytic toxins are quickly oxidized to non toxic products if the pH is not controlled during their extraction. Conditions of neutral and alkaline pH favour the oxidation. Under extremely acidic pHs (1 M of free acid) carbamoyl groups are removed, while at pH 1 and 100 ^{º}C the lost group correspond to the sulphate (sulpho-carbamoyl) of the sulphocarbamoyl toxins, with a complete conversion in 5 min (Hall, S. and Reichardt, P.B. 1984. Cryptic paralytic shellfish toxins. In "Seafood toxins" (Ragelis, E.P. Ed.). American Chemical Society, Washington, D.C. pp. 113-123). Due to the low toxicity of the sulphocarbamoyl toxins and to the high toxicity of the carbamoyl toxins, the loss of the sulphate group produces an increase in the total toxicity.

Although it is possible to predict the time of the year, and in some parts of the world, the exact localization of the PSP proliferation, the toxicity vary enormously from year to year. Therefore, monitoring programs are absolutely necessary in order to protect the shellfish industry and the consumer. The mouse bioassay has been a standard method for PSP toxins detection and quantification for more than 50 years (Sommer, H. and Meyer, K.F. 1937. Paralytic shellfish poisoning. Arch. Path. 24: 569-598; McFarren, E.F., Schantz, E.J., Campbell, J.E. and Lewis, K.H. 1958. Chemical determination of paralytic shellfish poison in clams. J. Assoc. Off. Anal. Chem. 41: 168-177; Helrich, K. 1990. "Official Methods of Analysis of the Association of Official Analytical Chemists", 15th ed. Arlington, VA: AOAC Inc., pp. 881-882). Due to the use of experimentation animals, the variability of the results and because the sensibility of the mouse bioassay is very close to the regulatory limits, this method has been tried to replace for other methods, for example, toxin detection by HPLC. However, the mouse bioassay is simple and rapid to operate. On the other hand, this method is a direct measurement of toxicity, which it is an important consideration for the security of the shellfish, especially because the discovery of new toxins. The HPLC method is based on a chromatographic ion pairing-separation of toxins in a RP8 column. Subsequently, through a post column derivatization, toxins are alkaline oxidated and then fluorometrically detected (Sullivan, J.J., Wenkell, M. and Hall, S. 1988. Detection of paralytic shellfish toxins. In "Handbook of Natural Toxins 3: Marine Toxins and Venoms" (Tu, A.T. Ed.) Marcel Dekker Inc., New York, pp. 87-106; Oshima, Y., Sugino, K. and Yasumoto, T. 1988. Latest advances in HPLC analysis of paralytic shellfish toxins. In "Mycotoxins and Phycotoxins '88" (Natori, S., Hashimoto, K. and Ueno, Y. Eds.) Amsterdam, Elsevier Science Publishers B.V., pp. 319-326).

Paralytic Shellfish Poisoning toxins are known to have the following chemical structures:

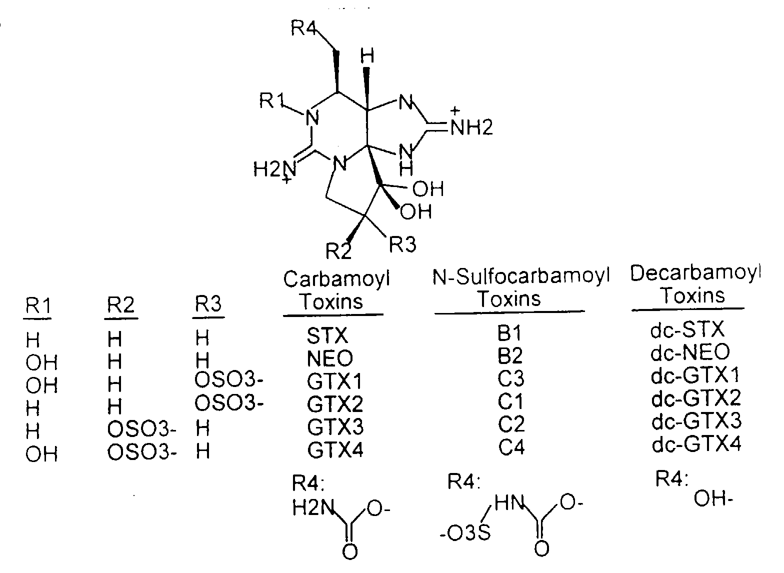

The occurrence of intoxication due to paralytic toxin in the world has increased consistently in the last years. Until 1970, there have been registered some 1700 cases of PSP, mainly in North America and Europe (Prakash, A., Medcof, J.C. and Tennant, A.D. 1971. Paralytic shellfish poisoning in Eastern Canada. Bull. Fish. Res. Board Can. 117: 1-88). On the other hand, in the period 1971-1984 there have been described around 900 additional cases, especially in zones of the world where PSP was practically unknown (WHO. 1984. Aquatic (Marine and Freshwater) Biotoxins. Environmental Health Criteria 37. International Programme on Chemical Safety, World Health Organization, Geneva). In China, PSP appeared at the beginning of 1950s, in Japan and Norway at the end of 1960s, in Malaysia, Philippines, New Guinea, Australia, Indonesia, Argentina and Chile at the end of 1970s and beginning of 1980s, in Sweden, Denmark, Guatemala, Venezuela, Mexico and Uruguay at the end of 1980s and beginning of 1990s. Actually large part of the world-wide coasts have or had recurrent proliferation of PSP producer algae. This has generated a growing problem in Public Health, especially concerning with the prevention of intoxication in human beings. With the continual increase in the world-wide areas that are contaminated with PSP producer algae, the areas destined to the shellfish recollection and cultivation are becoming more limited. This has caused a reduction in the production in many areas, with the subsequent social-economical impact of the involved fisherman populations. This situation has driven to evaluate seriously of how it is possible to utilize these PSP contaminated shellfish.

One alternative of utilization of PSP-containing shellfish is detoxified them to levels that are not toxic to human beings. The maximal level of PSP that have been world-wide accepted as safe for a shellfish was 80 ug of equivalent STX for each 100 g of mollusc flesh.

Shellfish PSP detoxification data found in the literature are scarce and non systematic. The proposed shellfish detoxification processes could be grouped in 4 classes of strategies:
1.- Detoxification of alive shellfish.
2.- Chemical treatment.
3.- Removal of the more toxic parts.
4.- Processing.

### 1.- Detoxification of alive shellfish:

Detoxification of alive shelffish by transplanting the toxic shellfish to a non toxic area. In this circumstance the shellfish undergo detoxification by depuration unless a retoxification occurs. Actually there is known only detailed information about the kinetic detoxification of 3 species of scallops: *Patinopecten yessoensis*, *Placopecten magellanicus*, and *Chlamys nipponensis* (Medcof, J.C., Leim, A.H., Needler, A.B., Needler, A.W.H., Gibbard, J. and Naubert, J. 1947. Paralytic shellfish poisoning on the Canadian Atlantic coast. Bull. Fish. Res. Board Can. 75: 1-32; Jamieson, G.S. and Chandler, R.A. 1983. Paralytic shellfish poison in sea scallops (*Placopecten magellanicus*) in the west Atlantic. Can. J. Fish. Aquat. Sci. 40: 313-318; Shumway, S.E., Sherman-Caswell, S. and Hurst, J.W. Jr. 1988. Paralytic shellfish poisoning in Maine: monitoring a monster. J. Shellfish Res. 7: 643-652). The facts now available suggest that within the filter-feeding bivalve molluscs, scallops can be classified within the species that retain the toxins for long time. For example, the retention of paralytic toxins in *P. magellanicus* has been informed for periods that goes from several months until 2 years (Medcof, J.C., Leim, A.H., Needler, A.B., Needler, A.W.H., Gibbard, J. and Naubert, J. 1947. Paralytic shellfish poisoning on the Canadian Atlantic coast. Bull. Fish. Res. Board Can. 75: 1-32; Jamieson, G.S. and Chandler, R.A. 1983. Paralytic shellfish poison in sea scallops (*Placopecten magellanicus*) in the west Atlantic. Can. J. Fish. Aquat. Sci. 40: 313-318; Shumway, S.E., Sherman-Caswell, S. and Hurst, J.W. Jr. 1988. Paralytic shellfish poisoning in Maine: monitoring a monster. J. Shellfish Res. 7: 643-652). Certain tissues of *P. magellanicus*, particularly the digestive glands and rims, can remain toxics through all year (Bourne, N. 1965. Paralytic shellfish poison in sea scallops (*Placopecten magellanicus*, *Gmelin*). J. Fish. Res. Board Can. 22: 1137-1149; Shumway, S.E., Sherman-Caswell, S. and Hurst, J.W. Jr. 1988. Paralytic shellfish poisoning in Maine: monitoring a monster. J. Shellfish Res. 7: 643-652). Very similar results were gotten for the pink scallop *Chlamys hastata* (Nishitani, L. and Chew, K. 1988. PSP toxins in the Pacific coast states: monitoring programs and effects on bivalve industries. J. Shellfish Res. 7: 653-669).

Despite of that this method is technically feasible, the cost of transfer, transplant and re-seeding make this decontamination procedure economically not very practicable.

### 2.- Chemical treatment:

Knowing the paralytic toxin formulas and together with some empirical observations, Hayes (1966) proposed that toxins could be extracted and/ or destroyed under acidic conditions, particularly in presence of oxygen. Based on this observation, experiments were carried out in Alaska with live and dead clams and clam flesh under acidic conditions. It was observed that at pH as low as 5.0, a reduction of the toxicity levels were not observed (Hayes, M.L. 1966. Acid pre-treatment to remove paralytic shellfish poison from butter clams (*Saxidomus giganteus*). Technical Report N^{º} 72. U.S. Fish and Wildlife Service, Bureau of Commercial Fisheries, Technological Laboratory, Ketchikan, Alaska).

### 3.- Removal of the more toxic parts:

The PSP toxins distribution into bivalve shellfish tissues are variable and it has been demonstrated that it relies on the involved species. Within the most studied shellfish are scallops and clams.

In general, it has been determined that the digestive glands (hepatopancreas and liver) usually possess the highest levels of paralytic toxins. Rims (mantels, rings, or borders), gills and gonads (roe) also possess important quantities of paralytic toxins, although levels lower than those from the digestive glands. Finally, adductor muscles and the foot are tissues that always, except in very few exceptions, possess very low levels of toxins (see Table 1) (Shumway, S.E. and Cembella, A.D. 1993. The impact of, toxic algae on scallop culture and fisheries. Rev. Fish. Sci. 1: 121-150; Cembella, A.D., Shumway, S.E. and Lewis, N.I. 1993. Anatomical distribution and spatio-temporal variation in paralytic shellfish toxin composition in two bivalve species from the Gulf of Maine. J. Shellfish Res. 12: 389-403; Cembella, A.D. and Shumway, S.E. 1995. Anatomical and spatiotemporal variations in PSP toxin composition in natural populations of the surfclam *Spisula solidissima* in the Gulf of Maine. In "Harmful Marine Algal Blooms" (Lassus, P., Arzul, G., Erard, E., Gentlen, P. and Marcaillou, C. Eds.) Lavoisier, Intercept Ltd., pp. 421-426).

**Table 1**

| Anatomical distribution of paralytic toxins in scallop and clam. | | | |
|---|---|---|---|
| **Mollusc** | **Tissue** | **Relative contribution to the total weight (%)** | **Relative toxicity (% of total toxicity)** |
| **Scallop** | Digestive gland | 21 | 69-75 |
| | Rim | 11 | 23-27 |
| | Gonad | 23 | 1-2 |
| | Gill | 10 | 1-2 |
| | Adductor Muscle | 36 | <1 |
| **Clam** | Digestive gland | 18 | 37 |
| | Rim | 14 | 20 |
| | Siphons | 10 | 13 |
| | Gill | 6 | 21 |
| | Foot | 30 | 7 |
| | Adductor muscle | 22 | 2 |

| | | | |
|---|---|---|---|
| * Data obtained from Shumway and Cembella, 1993; Cembella *et al*., 1993; Cembella and Shumway, 1995. | | | |

One of the clearest examples of the utilization of "decontamination by removal of the more toxic portions" corresponds to scallops. In North America, the effects of algal blooms on the scallop cultivations are ignored, since only the adductor muscle is consumed. As indicated in table 1, the adductor muscle is frequently the tissue with the lowest level of paralytic toxins. Once scallops are harvested, almost immediately the adductor muscle was obtained and the rest of the tissues together with the shells, are discarded. The discarded tissues, and that include rim (mantel, rings or borders), gonad (roe), digestive gland (hepatopancreas, liver) and gills, correspond to approximately the 65% of the total mollusc weight (Cembella, A.D., Shumway, S.E. and Lewis, N.I. 1993. Anatomical distribution and spatio-temporal variation in paralytic shellfish toxin composition in two bivalve species from the Gulf of Maine. J. Shellfish Res. 12: 389-403).

However, in some markets, such us Latin America, Europe and Australia, scallops are sold together with the gonad or as wholes. In this case, this procedure in particular, as well as in many other cases, were molluscs are sold as wholes, it is not applicable.

### 4.- Processing.

### 4.1.- Cooking and canning:

It has been described that just the cooking of contaminated molluscs can reduce their toxicity level. Initial works with paralytic toxins demonstrated that the heat could destroy an important part of toxins. Medcof *et al*. (1947) and Quayle (1969) described the reduction of total toxicity of toxic fresh molluscs when these were subjected to home cooking processes, like boiling or frying. They also demonstrated, using a clam (*Mya arenaria*), that the commercial canning was more effective than the domestic cooking in reducing the PSP toxicity. It was demonstrated that the pre-cooking with water vapour for 10 min, of low PSP toxicity shellfish, succeeded in reducing their toxic levels in approximately a 90%, but posterior treatments with water vapour didn't succeed in reducing more the toxicity. A latter treatment in autoclave at 121°C (250^{º}F) for 45 min reduced the toxic content in only a 3% additional, and 90 min of autoclave caused a 1% of additional reduction. Quayle (1969), Prakash *et al*. (1971), Noguchi *et al*. (1980) and Berenguer *et al*. (1993) have contributed important observations to demonstrate a toxicity reduction during the commercial canning process. Recently, it have also been informed that the speed of thermal degradation of some PSP toxins relies on the type of toxin involved and on the temperature (Nagashima, Y., Noguchi, T., Tanaka, M. and Hashimoto, K. 1991. Thermal degradation of paralytic shellfish poison. J. Food Sci. 56: 1572-1575).

Table 2 summarizes some data obtained on the toxicity reduction by commercial canning. In general, it was observed that the commercial canning of molluscs that possess initial toxicity superior than 1000 mg STXeq./ 100 g achieves important decontamination level, but their final toxicity are not adequate for human consumption. This detoxification procedure by canning would only serve for decontamination, with certain level of security, molluscs that possess up to 500 ug eq. STX/ 100g.

### 4.2.- Freezing:

Short times of freezing does not reduce substantially the PSP toxin levels. Only after several months of storage at - 20^{º}C smaller reductions in toxicity was detected. However, the freezing of whole molluscs results in a migration of toxins from more to fewer toxic parts, for example, from digestive glands to adductor muscles. This phenomenon is also carried out during the thawing of the molluscs (Shumway, S.E. and Cembella, A.D. 1993. The impact of toxic algae on scallop culture and fisheries. Rev. Fish. Sci. 1: 121-150).

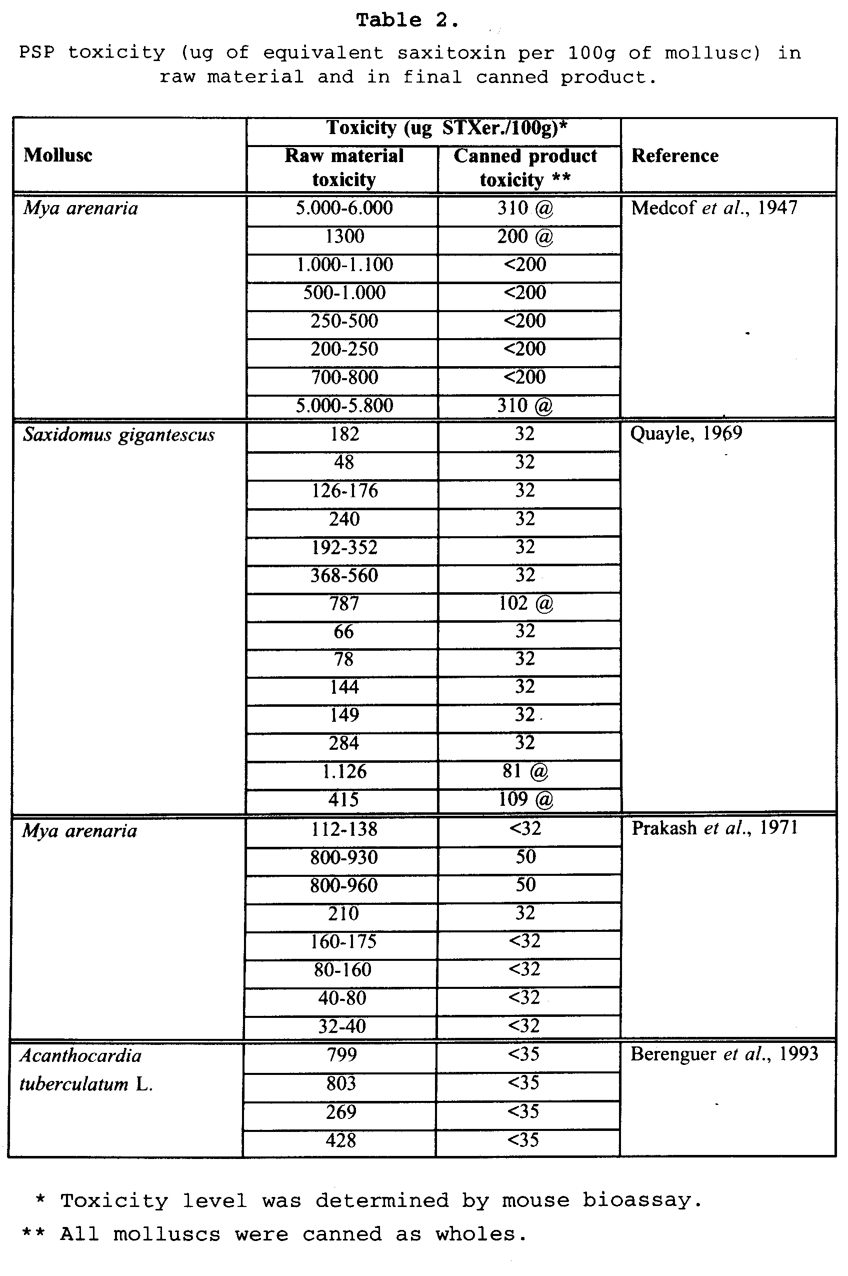

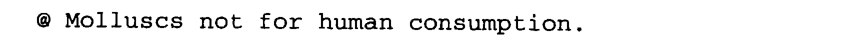

The present invention, as claimed, is intended to provide a process capable of overcoming the shortcomings of conventional shellfish detoxification.

According to the invention, decontamination is achieved by a process that involves a chemical treatment of shellfish. Said chemical treatment consists in shellfish cooking in an alkaline pH solution. This treatment can be combined with one or several other processes for the reduction of the final toxicity of the product, for example partial shellfish detoxification by depuration, removal of the more toxic parts, and commercial cooking/canning. This process succeeds in reducing the total toxicity of the shellfish to levels lower than 80 ug/ 100 g shellfish, independently on the toxin profile present and on the initial toxicity of the shellfish. Thereby an industrial process that can guarantee the shellfish decontamination with results 100% compatible with the international regulatory norms for human consumption is achieved.

The alkaline treatment consists on submerging paralytic toxin contaminated shellfish in a alkaline pH solution and then submitting to a thermal process.

The shellfish can be fresh live, fresh dead, frozen, pre-cooked (by water vapour treatment, autoclave, boiled, fried, etc.), with or without shell, whole or chopped. This mollusc can be whatever species of monovalves like snails, locos, abalons, limpets, etc.; or whatever species of bivalves like all kind of mussels, big mussels, Chilean mussels, clams, oysters, scallops, tumbaos, culengues, navajas, navajuelas, machas, picorocos, etc.; or any another species of shellfish independently of their species. Any other marine product contaminated with PSP toxins are also included in this decontamination procedure.

The alkaline solution can be obtained using any buffer that is able of regulating the pH to alkaline values. As a manner of example the following buffers can be cited: carbonate/ bicarbonate; carbonate/ sodium hydroxide; sodium hydroxide; H₂PO₄⁻/ HPO₄²⁻; HPO₄²⁻/ PO₄³⁻; citrate/ sodium hydroxide; barbital; barbital/ HCl; barbital/ sodium hydroxide; borate; borate/ HCl; borate/ boric acid; borate/ sodium hydroxide; aminoacid; aminoacid/ sodium hydroxide; phosphate/ borate; phosphate/ citrate; citrate-phosphate-borate/ HCl; imidazole/ HCl; Trizma/ HCl; Tricine/ HCl, among others. The concentration of this alkaline solution can vary from 1 mM up to 5 M, more specifically between 5 mM and 2 M, depending on the treated product and on the quantity of toxin desired to destroy.

The alkaline pH is any pH that is equal or superior to 6.0. The more alkaline the pH is, the more efficient it is in the paralytic toxin destruction. The most alkaline pH that it is possible to use will depend on the treated product, the initial toxicity, and the capacity that possesses the product to protect an organoleptic characteristic acceptable for human consumption.

The time of shellfish immersion can vary from some seconds up to 2 days. In general, time is selected so as to permit the complete imbibition of the shellfish with the alkaline solution and its diffusion to the contaminated tissues. Then, the time will depend on the shellfish size; their presentation form, that is, if molluscs are or not shucked, if the molluscs are whole or not, if they have been or not pre-cooked, etc.; and if they are live or not. The live shellfish aspire the alkaline solution through the siphons and, in these conditions, it diffuse faster to the inside of the shellfish.

The thermal process is important for the paralytic toxin destruction. Once molluscs are contacted and completely imhibed with the alkaline solution, the shellfish are thermally treated by boiling in the treatment solution, injection of hot water vapour directly in the imbibed shellfish, autoclave of the imbibed shellfish, among other possibilities. The time and the temperature of the treatment will depend on the treated shellfish and on the amount of toxin that is necessary to destroy. In general, it can vary between 10 seconds to 5 hours.

It is possible that not enough toxin is destroyed to allow the final level of toxicity to reach the permitted levels. In this case it is possible to repeat the alkaline treatment as many times as necessary. By using the process of the present invention, it is possible to destroy the toxins of the contaminated shellfish, up to reaching the adequate levels of toxicity for human consumption.

During cooking of contaminated shellfish in presence of the alkaline solution, besides destruction, an extraction of toxins from the shellfish is produced. The uppernatant liquid possesses an important amount of toxin, initially present in the shellfish. This phenomenon also produces a migration of the toxins within the shellfish from more to less contaminated parts, for example, from digestive glands to adductor muscles and foot. Then, in high PSP contaminated shellfish, it can be necessary to remove the more toxic parts previously to the alkaline treatment, thus avoiding contamination by toxin diffusion.

The extracted toxins from the shellfish using the alkaline treatment, remain contained in the liquids in which shellfish are submerged. These could be removed, and/ or concentrated using well-known methods in the technique, or be destroyed totally through the alkaline treatment described in this invention, using, if necessary, more drastic conditions.

To optimize the industrial decontamination process and utilize this process with raw materials containing high toxicity levels, the alkaline treatment can be associated with other already existent processes for toxin decontamination. For example, in a same line of production can exist, besides the alkaline treatment, one or several (or all) treatments that can be selected from: partial depuration of shellfish; removal of the more toxic parts and commercial cooking/ canning.

### a) Partial depuration.

The production plant can be equipped with depuration pools. These pools can be filled with PSP-non contaminated seawater and shellfish can be deposited there during variable times. The presence of non contaminated seawater will permit the reduction of the initial toxin load of shellfish. The time of treatment can vary from hours up to weeks relying on the shellfish and on the initial toxicity. Subsequently shellfish are collected and subjected to the industrial decontamination process and canning.

### b) Removal of the most toxic parts.

Great part of shellfish can be commercialized as a non whole product. Thus, there are tongue or foot canned from diverse shellfish, like for example machas, clams, tumbaos, culengues, navajas, navajuelas, or adductor muscles from scallops. In this case these products have the siphons, rims, digestive glands, gills and gonads eliminated, constituting generally the most contaminated tissues. The residual toxicity of the adductor muscles and tongues or feet can be eliminated through the alkaline treatment.

On the other hand, discards of the canning process of tongues or feet and adductor muscles, especially rims and in some cases gonads and siphons, can be decontaminated using the alkaline treatment and used for the elaboration of other canned products, for example soups, shellfish paste, etc.

### c) Commercial cooking/ canning.

Because cooking/ canning is a normal stage of the canning process of shellfish, the treatment described in this patent also takes advantage of it for the decontamination of PSP toxins. As described in the body of the patent, the canning of contaminated shellfish itself can reduce in a great extent the toxicity levels. Therefore, still when the alkaline treatment doesn't reduce the total toxicity to permitted levels, the canning could reduce them up to the safe levels.

The final product pH must be regulated to control both the organoleptic characteristic and the reologic properties of the shellfish. This regulation is carried out easily when the treated products as described in this patent, are destined to commercial canning. The pH can be controlled by the addition of a cover liquid that contains a buffer to the appropriate pH or an acid. This can be selected for example of: acetic acid, citric acid, ascorbic acid, butyric acid, phosphoric acid, hydrochloric acid, glutamic acid, any aminoacid, ftalic acid, succinic acid, pyruvic acid, glyceric acid, malic acid, boric acid, acetic/ acetate, H₃PO₄/ H₂PO₄⁻, H₂PO₄⁻/ HPO₄²⁻, polyphosphate, tripolyphosphate, EDTA, among others. Within these compounds those that improve the organoleptic, reologic or any another properties of the final product acceptability, are preferred. For example phosphates and polyphosphates produce an increment in the water retention capacity of canned shellfish, ascorbic acid possesses antioxidant properties, etc. In this invention the possibility of utilizing other buffers as cover liquid that give other interesting properties to the final product, is not discarded.

If it is considered that the decontamination process by alkaline treatment destroys >90% of toxins, and that the procedure of removal of the more toxic parts and cooking/ canning decrease 90% and 80% of the shellfish toxins, respectively, so that a process that involves all three stages of decontamination could theoretically diminish toxicity levels as high as 40,000 ug equivalent STX / 100 g. to permitted levels. However, these high levels of toxicity are not frequent, and usually the toxicity level in the PSP-endemic zones oscillates between 80 and 10,000 ug equivalent STX / 100 g. This permits a complete applicability of this decontamination procedure to any kind of mollusc from PSP-endemic zones.

Figure 1 summarizes the known chemical structures of various known PSP toxins.

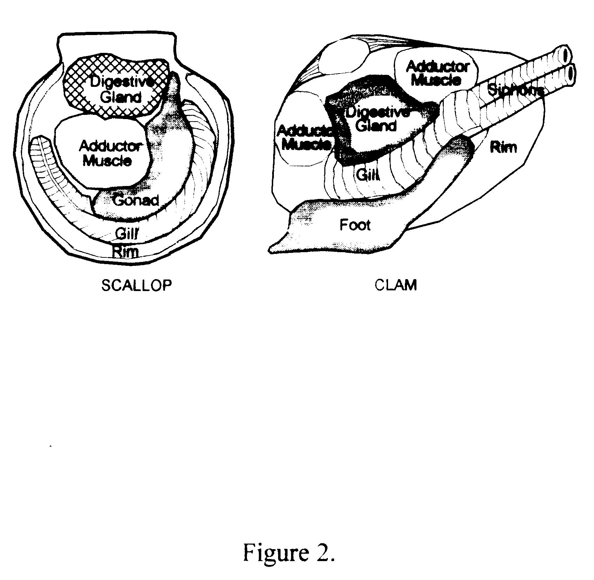

Figure 2 schematically illustrates the positions of the portions of scallops and clams identified in Table 1.

Figure 3 shows paralytic toxin profiles of mussels before and after being subjected to decontamination by means of the process of the present invention in accordance with some working experiences.

Figure 4 is a flowchart schematically showing the steps to be followed in an industrial process according to a preferred embodiment of the invention.

The invention will hereafter be described on the grounds of severak practical working experiences.

### EXAMPLE 1

### Detoxification of mussels contaminated with paralytic toxin using an alkaline pH treatment.

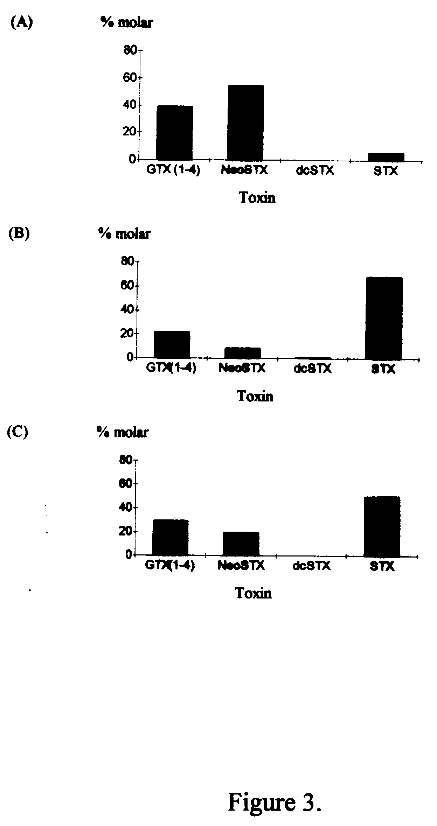

Mussels were collected from the XII region of Chile, zone that possess an endemic problem with an *Alexandrium catenella* bloom. Samples are contaminated with paralytic toxin with a toxicity level of 6,800 ug eq. STX/ 100 g, measured by mouse bioassay, or 7,816 ug eq. STX/ 100 g, measured by HPLC. The samples were submitted to the alkaline treatment 24 hours after their catch. During their transit samples were keep refrigerated at 4^{º}C. The paralytic toxin profile of the initial samples are shown in Figure 3(A).

Live mussels, whole and with shell, were submerged in 100 mM sodium bicarbonate solution (pH 9.0) and were incubated 1 hour at room temperature. Subsequently, shellfish were washed with abundant water, submerged again in 100 mM sodium bicarbonate solution (pH 9.0) and then boiled for 20 minutes. After cooling at room temperature, mussels were chucked by hand and washed with abundant water. Analysis of these samples revealed that the toxicity was 550 ug eq. STX / 100 g, measured by mouse bioassay, or 408 ug eq. STX/ 100 measured by HPLC (figure 3), reaching a reduction of 91,9% (bioassay) or 94,8% (HPLC) on the initial toxicity. The paralytic toxin profile of the samples after this first treatment is shown in Figure 3(B).

A second treatment of mussels with a fresh solution of bicarbonate, in the same conditions described previously, reduced the final toxicity up to 69 ug eq. STX/ 100 g, measured by mouse bioassay, or 61 ug eq. STX/ 100 g, measured by HPLC (figure 3). The percentage of decontamination was 99,0% (bioassay) or 99,9% (HPLC) in accordance with the initial toxicity. This second treatment with the alkaline solution allowed to reduce the toxicity levels to a safe level which is completely compatible with human consumption. The paralytic toxin profile of the samples after this second treatment is shown in Figure 3(C).

Alkaline treatment of fresh chucked mussels allowed to reduce in only one treatment, the initial toxicity in a 96,8% (bioassay) or 95,3% (HPLC). The better efficiency of this treatment could be due to the improvement of the alkaline solution accessibility to the contaminated tissues.

The paralytic toxin profile changed drastically by the alkaline treatment (see figure 3). It is possible to observe that GTXs toxins and the neosaxitoxin were principally destroyed. Their proportion in treated shellfish decrease respect to the initial raw material. On the other hand, saxitoxin was slowly destroyed, increasing their proportion in the treated products.

The biotoxicologic assay was carried out according to the method of Helrich (1990) and correspond to the official method of the A.O.A.C (Association of Official Analytical Chemists). As standard for mouse bioassay calibration, an international standard of STX, kindly donated by Dr. S. Hall, Food and Drug Administration, Washington DC, was used. Briefly, 100 g of shellfish, previously milled, were homogenized with 100 mL of HCl 0.1 N, the pH was adjusted to < 4.0, when necessary, and then boiled for 5 min. After cooling, final volume was adjusted to 200 mL and then filtered. 1 mL of filtrate was injected intraperitoneally to a preweight mouse (15-21 grams) and the death time was registered. Using the Sommer and Meyer table (Sommer, H. and Meyer, K.F. 1937. Paralytic shellfish poisoning. Arch. Path. 24: 569-598; Helrich, K. 1990. "Official Methods of Analysis of the Association of Official Analytical Chemists", 15th ed. Arlington, VA: AOAC Inc., pp. 881-882) and according to the death time, mouse units were calculated and corrected by the mouse weight. The ug eq. STX / 100 g were calculated through the calibration with an international standard of STX.

The HPLC analysis was carried out basically as described by Oshima *et al*. (1988). Briefly, the acid extracts utilized for the mouse bioassay, were chromatografied in a Sep Pak C18 column (Waters Co) and then deproteinized by ultrafiltration (Milipore Ultrafree C3GC membrane, exclusion 10,000 PM). The eluted was injected into a HPLC equipped with a RP8 column and subjected to an elution at 0.8 mL/ min with buffer A (2 mM sodium 1-heptanesulfonate in 10 mM ammonium phosphate pH 7.2) for the GTXs toxins and dcGTXs, and an elution with buffer B (A : acetonitrile = 9 : 1), for the STX toxins, NEO and dcSTX. The detection was carried out with a post column derivatization with 0.4 mL/ min of 7 mM peryodic acid in 50 mM sodium phosphate pH 9.0, heating at 65 ^{º}C in a 10 meter Teflon tube (0.5 mm i.d.), and 0.4 mL/ min of 0.4 M acetic acid, and detection with fluorescence detector (ex 330 nm; em 390 nm).

### EXAMPLE 2

### An industrial decontamination process of PSP toxin containing shellfish.

This example describes an industrial decontamination process of culengue. This bivalve shellfish was collected in a zone endemically contaminated with paralytic toxin and then transported to a canning plant in order to carry out the experience. Three shellfish samples that possessed different toxicity levels were collected. The assay was carried out processing the culengues in 3 batches of approximately 300 kilos each one (a batch per sample). In order to carry out the analysis, 10 kilograms of randomly taken samples, were collected. In order to enable a representative analysis the whole samples were homogenized and aliquots were utilized for the PSP determination by mouse bioassay and HPLC.

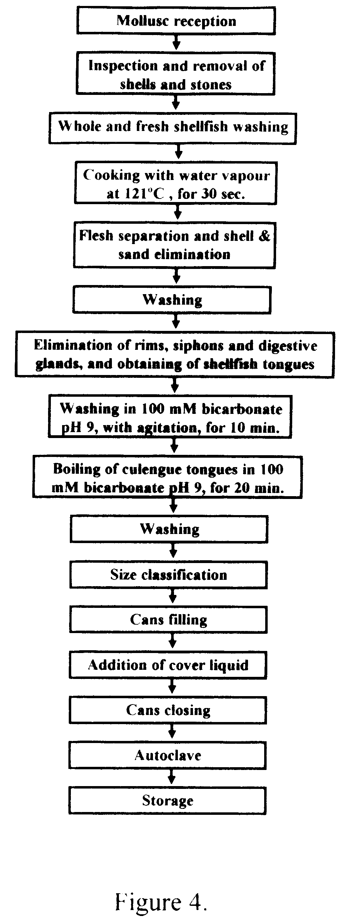

The industrial process used is detailed in the flow diagram described in the figure 4. The process is a continuous process of traditional shellfish canning in which variations were done in order to include the toxin decontamination steps.

The results obtained in this process were summarized in the table 3. With the 3 processes a considerable reduction of the culengues toxicity was achieved. The reduction of the toxicity was always over 90%. The final toxicity of canned products permitted their commercialization and they were below the established limits for the prohibition of consumption.

**Table 3**

| Content of PSP toxins (ug equivalent saxitoxin/ 100 g) in fresh raw material and in the final product decontaminated/canned. | | |
|---|---|---|
| **Toxicity (ug eq. STX/100g)** | | **Percentage of toxicity reduction (%)** |
| **Fresh raw material** | **Canned final product** | |
| 2560 | <35 | >98 |
| 1803 | <35 | >98 |
| 489 | <35 | >93 |
| 2943 | 48 | 98 |
| 1760 | 35 | 98 |
| 567 | 28 | 95 |

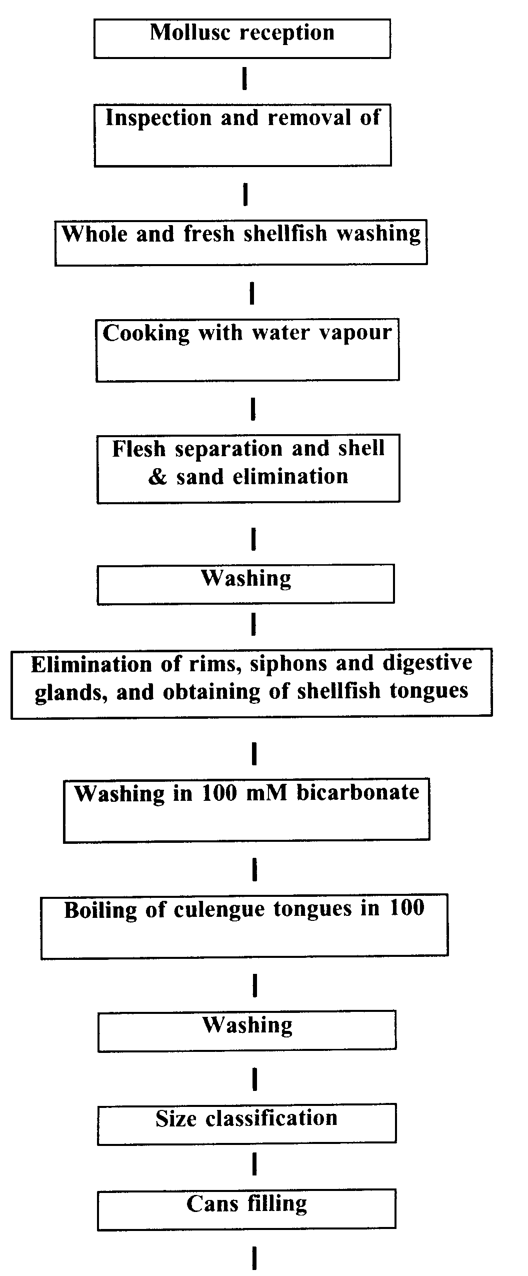

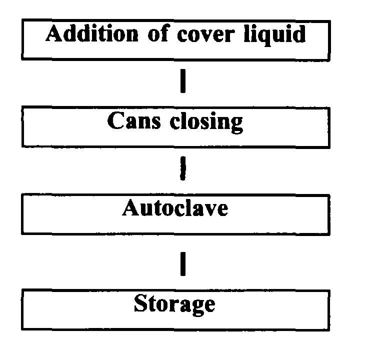

Figure 4: Flow diagram of the industrial process destined to the decontamination and canning of culengue. The cover liquid employed was 2% (w/ v) NaCl, 0.5% (w/ v) sodium polyphosphate, 0.015% (w/ v) EDTA, 0.1% (w/ v) citric acid. The autoclaving was carried out at 115^{º}C for 45 min.

## Claims

1. A process for detoxification of shellfish contaminated with paralytic shellfish poisoning toxins, CHARACTERIZED in that it comprises an alkaline treatment of the shellfish with an alkaline solution and subsequent heating.

2. A process according to claim 1, CHARACTERIZED in that the treatment comprises submerging the shellfish completely in an alkaline solution, allowing to imbibe for a time and then subjecting to a thermal process.

3. A process according to any of claims 1 or 2, CHARACTERIZED in that the alkaline treatment is supplemented by depuration of the shellfish, removal of their more toxic parts, and cooking and canning.

4. A process according to any of claims 1 or 2, CHARACTERIZED in that the alkaline solution is selected from alkaline buffers being not detrimental to human consumption and allowing control and optimization of organoleptic properties of the shellfish.

5. A process according to any of claims 1, 2 or 4, CHARACTERIZED in that the alkaline solution is selected from any of the following buffers: carbonate/ bicarbonate; carbonate/ sodium hydroxide; sodium hydroxide; H₂PO₄⁻/ HPO₄²⁻; HPO₄²⁻/ PO₄³⁻; citrate/ sodium hydroxide; barbital; barbital/ HCl; barbital/ sodium hydroxide; borate; borate/ HCl; borate/ boric acid; borate/ sodium hydroxide; any aminoacid; any aminoacid/ sodium hydroxide; phosphate/ borate; phosphate/ citrate; citrate-phosphate-borate/ HCl; imidazol/ HCl; Trizma/ HCl; Tricine/ HCl or mixtures thereof.

6. A process according to claim 5, CHARACTERIZED in that the alkaline solution is selected from carbonate/ bicarbonate, or carbonate/ sodium hydroxide buffers, or from mixtures thereof.

7. A process according to any of claims 1, 2 or 5, CHARACTERIZED in that the concentration of the alkaline buffer is 1 mM to 5 M, more specifically, preferredly between 5 mM and 2 M, depending on the treated product and on the amount of toxin that is desired to destroy.

8. A process according to any of claims 1, 2, 5 or 7, CHARACTERIZED in that the alkaline pH is any pH that is equal or superior to 6.0.

9. A process according to claim 1 or 2, CHARACTERIZED in that the time of immersion of the shellfish is from some seconds up to 2 days.

10. A process according to claim 1 or 2, CHARACTERIZED in that the thermal process after the imbibition with the alkaline solution, is carried out by boiling in the treatment solution, injection of hot water vapour directly into the imbibed shellfish, or autoclave of the imbibed shellfish.

11. A process according to any of claims 1, 2 or 10, CHARACTERIZED in that the time and the temperature of the treatment will depend on the kind of shellfish and on the quantity of toxin that is necessary to destroy, and in general it can vary between 10 seconds to 5 hours.

12. A process according to claim 1 or 2, CHARACTERIZED in that the alkaline treatment is repeated at least once to further reduce the level of toxin to the desired level.

13. A process according to any of claims 1, 2 or 5 to 12, CHARACTERIZED in that the alkaline treatment reduces the shellfish toxicity by destruction as well as by extraction of toxins.

14. A process according to claim 13, CHARACTERIZED in that the extracted toxins from the shellfish are removed and/ or concentrated from the liquids used in the thermal treatment of claim 9, or destroyed using a more drastic alkaline treatment.

15. A process according to claim 14, CHARACTERIZED in that the more drastic alkaline treatment, in order to destroy the extracted toxins from shellfish, comprises using more alkaline and more concentrated solutions and higher temperature and longer time thermal treatments than those used for shellfish decontamination.

16. A process according to claim 1 or 3, CHARACTERIZED in that the shellfish depuration is carried out by transferring the shellfish to a pool or to a free toxin zone until the level of toxicity naturally diminish.

17. A process according to claim 3, CHARACTERIZED in that the removal of the contaminated parts of the shellfish comprises elimination of siphons, rims, mantels, rings, or borders, digestive glands (hepatopancreas, liver), gills and gonads, including roe, constituting them the tissues that possess in general the larger amount of toxin, keeping the feet and adductor muscles.

18. A process according to claim 3 or 17, CHARACTERIZED in that the discarded tissues from the removal of the shellfish contaminated parts procedure, like rims, siphons and gonads can undergo the alkaline treatment in order to reduce their toxicity and be employed as raw material for other types of cans or products.

19. A process according to claim 3, CHARACTERIZED in that the cooking and/or canning, that are normal parts of the canning process, are also used for detoxification of PSP toxins.

20. A process according to claim 1, CHARACTERIZED in that initial toxicity of the shellfish is between 0 and 40,000 ug equivalent STX/ 100 g, more specifically between 80 and 10,000 ug STX equivalent/ 100 g.

21. A process according to claim 1 or 2, CHARACTERIZED in that the final pH of the product is reduced using an immersion treatment, optionally after the thermal treatment, with a buffer regulated to an acid pH or with an acid.

22. A process according to any of claims 1, 2 or 21 CHARACTERIZED in that the final pH of canned product is reduced utilizing a cover liquid that contains a buffer or an acid during the canning, capable of reducing the pH to more adequate organoleptic levels.

23. A process according to claim 21 or 22, CHARACTERIZED in that the buffers or acids used in order to reduce the pH are selected from the following compounds: acetic acid, citric acid, ascorbic acid, butyric acid, phosphoric acid, hydrochloric acid, glutamic acid, any aminoacid, phtalic acid, succinic acid, pyruvic acid, glyceric acid, malic acid, boric acid, acetic/ acetate, H₃PO₄/ H₂PO₄⁻, H₂PO₄⁻/ HPO₄²⁻, tripolyphosphate, EDTA.

24. A process according to claim 23, CHARACTERIZED in that the compounds employed to reduce the final pH of the product are used individually or in mixture and improve the organoleptic quality and/or the reologic properties of the final product.
